# EUROPÄISCHE PATENTANMELDUNG

(11) **EP 4 640 593 A1**
(43) Veröffentlichungstag der Anmeldung: **29.10.2025**
(21) Anmeldenummer: 25172508.1
(22) Anmeldetag: 25.04.2025
(51) Int. Cl.: B65G 21/06, B65G 23/44, B65G 23/04

(54) **FÖRDERBAND**

(30) Priorität: 26.04.2024 DE 202024102143 U
(71) Anmelder: WIPOTEC GmbH, 67657 Kaiserslautern (DE)
(72) Erfinder: Edrich, Andreas, 66424 Homburg (DE); Wolsiffer, Nils, 67722 Winnweiler (DE)
(74) Vertreter: Eder Schieschke & Partner mbB

(57) **Zusammenfassung**

Die Erfindung betrifft ein Förderband mit einem Transportgurt und ein derart damit zusammenwirkendes Chassis, dass durch Einsetzen des Förderbandes in das Chassis der Transportgurt automatisch betriebsbereit gespannt wird.

## Beschreibung

Die vorliegende Erfindung betrifft ein Förderband zum Transport von Gütern, ein dieses Förderband aufnehmendes Chassis sowie ein beide Komponenten aufweisendes Förderbandsystem.

In der industriellen Praxis werden Produkte häufig entlang von Förderstrecken bewegt, um sie währenddessen beispielsweise zu bearbeiten oder zu prüfen. Dazu werden Förderbänder verwendet, bei denen ein von einem Motor angetriebener Gurt einen Bandkörper umläuft, sodass ein auf dem Gurt aufliegendes Produkt in einer Förderrichtung gefördert wird.

Oft ist am vorderen und hinteren Ende des Bandkörpers eine Umlenkrolle vorgesehen, von denen eine zugleich als Antriebsrolle für den Gurt dient. Für eine gute Übertragung der Antriebsleistung auf den Gurt benötigt die Welle jedoch einen ausreichenden Durchmesser, der allerdings bei der Übergabe an eine stromaufwärts oder stromabwärts an das Förderband angrenzende Komponente einen mit zunehmendem Rollendurchmesser größer werdenden Übergabespalt erzeugt. Die besonders bei Wägebändern benötigte ruckfreie Übergabe der Produkte an diesem Übergabespalt ist dann nicht gewährleistet. Daher werden oft Umlenkemente mit kleinen Durchmessern am vorderen oder hinteren Ende des Bandkörpers bevorzugt.

Außerdem erfordern die Förderbänder regelmäßige Wartung, wozu sie aus der Förderstrecke ausgebaut werden müssen (Wartungszustand). Beim anschließenden Einbau in die Förderstrecke (Betriebszustand) kann es erforderlich sein, die Gurtspannung wieder neu einzustellen, was zeitaufwendig und damit kostenintensiv ist.

Aufgabe der vorliegenden Erfindung war es, ein Förderband-System anzubieten, welches die vorgenannten Nachteile überwindet. Die Aufgabe wird gelöst durch ein Förderband nach Anspruch 1 und ein Förderbandsystem nach Anspruch 9. Weitere vorteilhafte Ausführungsformen ergeben sich aus den Unteransprüchen.

Der vorliegenden Erfindung liegt der Gedanke zugrunde, dass der Antrieb des Gurts nicht über ein Umlenkelement am vorderen oder hinteren Ende des Bandkörpers erfolgt, sondern mittels einer unterhalb des Bandkörpers anzuordnenden, vom Gurt umlaufenden und durch einen Motor angetriebenen Antriebsrolle. Weiterhin ist das Förderband zur lösbaren Anordnung in einem Chassis vorgesehen, um daraus beispielsweise zu Wartungszwecken entnommen oder für den regulären Betrieb eingesetzt zu werden. Das Chassis könnte eine fest in der Förderstrecke angeordnete Aufnahme für das Förderband darstellen. Denkbar ist es alternativ auch, das Chassis beispielsweise mit dem Lastaufnehmer einer Wägezelle zu koppeln, um das Gewicht der mit dem Förderband geförderten Produkte erfassen zu können.

Das Förderband umfasst erfindungsgemäß einen Bandkörper, der sich im Wesentlichen in Förderrichtung X und in einer dazu orthogonal verlaufenden Querrichtung Y sowie einer zu beiden Richtungen orthogonalen Höhenrichtung Z erstreckt. In Förderrichtung erstreckt sich der Bandkörper von einem ersten Ende bis zu einem dem ersten Ende gegenüberliegenden zweiten Ende, wobei an beiden Enden jeweils ein sich in Querrichtung Y erstreckendes Umlenkelement vorgesehen ist.

Das Förderband umfasst ferner einen Transportgurt, welcher als Endlosband ausgebildet ist und den Bandkörper umläuft. Ein Transportgurt kann gebildet werden von einem flachen Band oder Riemen oder ähnlichen, geschlossenen und umlaufenden Transportmitteln, wobei im Sinne dieser Anmeldung auch mehrere solcher Elemente gemeinsam als ein Transportgurt gelten, solange sie gemeinsam von einer Antriebsrolle angetrieben werden.

Auch eine Antriebseinheit gehört zum Förderband, wobei die Antriebseinheit einen Motor umfasst und eine vom Motor angetriebene Antriebsrolle. Die Antriebsrolle erstreckt sich bevorzugt in Querrichtung Y und dient dazu, den Transportgurt anzutreiben. Die Antriebseinheit mit Motor und Antriebsrolle ist mit dem Bandkörper verbunden, beispielsweise verschraubt. Vorzugsweise erstreckt sich der Motor unterhalb des Bandkörpers, ohne nennenswert in Querrichtung Y seitlich darüber hinaus zu ragen. Dann lassen sich mehrere gleichartige Förderbänder in Querrichtung Y so nebeneinander platzieren, dass die jeweiligen Transportgurte nur geringen seitlichen Abstand zueinander haben. Mehrspurige Systeme können dann auf vergleichsweise kleinem Raum untergebracht werden.

Bevorzugt erstreckt sich ein Zahnriemen von einer Motorwelle zu einem geeigneten Ritzel der Antriebsrolle, um ein Drehmoment vom Motor in die Antriebsrolle einzubringen. Jedes andere, dem Fachmann bekannte Kraftübertragungsmittel von einem Motor auf eine Welle kommt ebenso infrage. Wenn die Antriebseinheit starr mit dem Bandkörper verbunden ist (beispielsweise durch Verschraubung, Rastmittel, Schnellspannmittel, auch werkzeuglos bedienbar), können beide Komponenten gemeinsam aus dem Chassis herausgenommen werden, ohne dabei ihre Anordnung relativ zueinander zu verändern. Dann bleibt der den Motor mit der Antriebsrolle verbindende Zahnriemen vorteilhafterweise gespannt. Ein erneutes Einstellen oder Nachspannen des Zahnriemens ist daher auch beim anschließenden Wiedereinsetzen in das Chassis nicht nötig und die zuvor eingestellte Zahnriemenspannung (auch ein anderer Riemen oder ein ähnlich wirkendes Kraftübertragungsmittel kommt in Frage) bleibt bestehen. Das ist gerade für einen ruhigen Bandlauf, wie er beispielsweise im Betrieb mit einem Wägeband erforderlich ist, wichtig.

Vorzugsweise ist der Motor frei auskragend am Bandkörper befestigt, und dazu beispielsweise nur an der Seite der Motorwelle über eine Flanschplatte mit dem Bandkörper verschraubt. Das auf der Unterseite des Bandkörpers zwischen dem Bandkörper und dem Motor hindurchgeführte Transportband kann dann im gelockerten Zustand, bspw. zu Wartungszwecken, leicht aus diesem Zwischenraum in Richtung auf das frei auskragende Gehäuseende herausgezogen werden, ohne dass der Motor von der Antriebseinheit bzw. vom Bandkörper gelöst werden müsste.

Zur Kraftübertragung von der Antriebsrolle auf den Transportgurt ist ein ausreichend großer Umschlingungswinkel (derjenige Winkel, entlang dessen Bogen der Transportgurt an der Antriebsrolle anliegt) erforderlich, um Gleitreibung bzw. Schlupf zwischen Gurt und Welle zu vermeiden. Vorzugsweise beträgt der Umschlingungswinkel wenigstens 90°. Ein Umschlingungswinkel von 180° oder mehr ist vorteilhaft.

Bei dem erfindungsgemäßen Förderband ist der Transportgurt so um den Bandkörper herumgeführt, dass die beiden Umlenkelemente an den beiden Enden des Bandkörpers sowie die Antriebsrolle gemeinsam vom Transportgurt umschlossen sind bzw. umlaufen werden. Eine Gurtinnenseite ist diesen Elementen dabei zugewandt. Eine dem Bandkörper abgewandte bzw. der Gurtinnenseite gegenüberliegende Gurtaußenseite des Transportgurtes bildet entlang der Oberseite des Bandkörpers eine Transportfläche zur Auflage von zu fördernden Produkten. Vorzugsweise ist die Transportfläche eben.

Das Förderband ist erfindungsgemäß dazu ausgebildet, modulartig in das oben erwähnte Chassis eingesetzt (Betriebszustand) bzw. daraus entnommen zu werden (Wartungszustand). Erfindungsgemäß soll das Förderband durch das Einsetzen in das Chassis betriebsbereit werden, ohne nennenswerte zusätzliche mechanische Einstellungen am Förderband oder Chassis vornehmen zu müssen. Umgekehrt soll die vollständige Entnahme des Förderbandes aus dem Chassis einfach und schnell möglich sein. Zur Befestigung des Förderbands am Chassis sind vorzugsweise Verbindungsmittel vorgesehen, die ein einfaches Lösen bzw. Befestigen ermöglichen. Die Mittel können Schrauben, Rastmittel oder Schnellspannmittel oder Kombinationen davon umfassen und vorzugsweise auch deren werkzeuglose Bedienung ermöglichen.

Eine besondere Bedeutung kommt hier der Gurtspannung zu. Um den Transportgurt ordnungsgemäß antreiben und die darauf aufliegenden Produkte definiert fördern zu können, muss der Transportgurt in seiner Längsrichtung eine Mindestspannung aufweisen. Besonders wichtig ist dies auch für die Kraftübertragung zwischen Transportgurt und Antriebsrolle. Selbst ein großer Umschlingungswinkel alleine genügt noch nicht, solange der Transportgurt nicht mit einer ausreichenden - aus der Gurtspannung resultierenden - Andruckkraft gegen die Antriebsrolle gedrückt wird. Wird das Förderband dagegen aus dem Chassis entnommen, um beispielsweise Wartungsaufgaben wahrzunehmen oder den Transportgurt zu wechseln, so ist es erforderlich, die Gurtspannung soweit zu reduzieren, dass der Transportgurt nach der Entnahme aus dem Chassis leicht in Querrichtung Y vom Bandkörper bzw. der Antriebsrolle abgezogen werden kann.

Die erfindungsgemäße Ausgestaltung des Förderbandes erlaubt es, die Gurtspannung durch das Einsetzen in das Chassis automatisch für den Betrieb einzustellen, während die Gurtspannung durch Entnahme aus dem Chassis automatisch reduziert wird. Dabei kommt folgendes Merkmal des Förderbandes in erfindungsgemäßer Weise zu tragen:
Die Anordnung der Antriebsrolle am Förderband ist so vorgesehen, dass oberhalb der Antriebsrolle und/oder in Förderrichtung vor und/oder hinter der Antriebsrolle ein Freiraum gebildet wird. In diesem Freiraum wird wenigstens eine mit dem Chassis befestigte Umlenkrolle angeordnet, so dass die Umlenkrolle im eingesetzten Zustand an der Gurtaußenseite des Transportgurts anliegen kann. Die Gurtaußenseite ist diejenige Seite des Gurts, auf der auch die zu fördernden Produkte aufliegen. In der Regel weist die Gurtaußenseite vom Bandkörper weg, während die der Gurtaußenseite gegenüber liegende Gurtinnenseite dem Bandkörper zugewandt ist und zum Beispiel die Umlenkelemente am vorderen und hinteren Ende des Bandkörpers und die Antriebsrolle berührt bzw. umläuft.

Wird ein erfindungsgemäßes Förderband dieser Art in das Chassis eingesetzt, dann gelangt der Transportgurt in Kontakt mit der wenigstens einen am Chassis befestigten Umlenkrolle, wodurch der Transportgurt gespannt und zugleich um einen vorgebbaren Winkel umgelenkt wird. Das Einsetzen des Förderbandes erfolgt, wie auch leicht anhand der Figuren zu sehen sein wird, entlang der Höhenrichtung in einer Abwärtsbewegung mit der unterhalb des Förderbandes angeordneten Antriebsrolle voran von oben in das Chassis hinein. Der Transportgurt umläuft zu diesem Zeitpunkt mit seiner Gurtinnenseite ohne nennenswerte Gurtspannung die Antriebsrolle, wobei die Gurtinnenseite der Antriebsrolle zugewandt ist. Im Rahmen der Einsetz-Bewegung wird die Antriebsrolle an der wenigstens einen Umlenkrolle der Antriebsrolle vorbei nach unten bewegt. Der den Bandkörper umlaufende Transportgurt, der sich dabei auch von der Antriebsrolle zu dem vorderen und hinteren Umlenkelement des Bandkörper erstreckt, gelangt dabei mit seiner Gurtaußenseite in Andruck mit der Umlenkrolle des Chassis. Die relativ zum Förderband ortsfeste und daher beim Einsetzen nicht mit bewegte Umlenkrolle nimmt dadurch Einfluss auf den vom Transportgurt zu durchlaufenden Umlaufweg um den Bandkörper herum und erzeugt im Transportgurt bei der weiteren Abwärtsbewegung des Förderbandes eine Gurtspannung, deren Betrag von der Einschubtiefe des Förderbandes in das Chassis abhängt.

Das Förderband wird vorzugsweise bis an einen vorgegebenen Anschlag in das Chassis eingesetzt bzw. eingeschoben. Der Anschlag wird zweckmäßigerweise so gewählt bzw. positioniert, dass mit Erreichen des Anschlags die Gurtspannung für den regulären Betrieb des Förderbandes ausreicht. Erfindungsgemäß wird also die Gurtspannung durch das Einsetzen des Förderbandes in das Chassis erzeugt bzw. eingestellt. Wird das Förderband in umgekehrter Richtung aus dem Chassis herausgehoben bzw. in den Wartungszustand überführt, reduziert sich die Andruckkraft zwischen Gurtaußenseite und Umlenkrolle, bis sich der Transportgurt vollständig von der Umlenkrolle löst und mit dem Förderband aus dem Chassis herausgehoben und davon getrennt wird. In diesem Zustand (Wartungszustand) ist die Gurtspannung vorzugsweise so gering, dass der Transportgurt in Querrichtung leicht vom Bandkörper bzw. von der Antriebsrolle abgezogen werden kann.

Aufgrund der modularen Gestaltung des Förderbandes einerseits und des Chassis andererseits wird die Wartung des Förderbandes erheblich vereinfacht. Im Wartungszustand kann der Transportgurt insbesondere in Querrichtung Y leicht vom Bandkörper abgezogen werden, da er in diesem Fall nicht mehr unter Spannung steht. Die Antriebsrolle des Förderbandes muss für einen solchen Gurtwechsel nicht relativ zum Förderband bewegt werden. Gleiches gilt für die am Bandkörper angeordneten Umlenkelemente, die im Stand der Technik häufig dazu verwendet werden, die Gurtspannung einzustellen bzw. für den Wechsel zu reduzieren. Bei der erfindungsgemäßen Gestaltung des Förderbandes ist das nicht erforderlich, da sich die Gurtspannung bereits mit Entnahme aus dem Chassis reduziert. Da die Antriebseinheit so (bevorzugt starr) mit dem Bandkörper verbunden ist, dass sie sich gemeinsam mit diesem aus dem Chassis herausnehmen lässt, kann auch die Antriebseinheit besonders leicht gewartet werden. Im Wartungszustand des Förderbandes ist auch der Motor, die Antriebsrolle oder ein zwischen Motor und Antriebsrolle verlaufender Zahnriemen leicht zugänglich.

Die vorzugsweise starre Verbindung der Antriebseinheit mit dem Bandkörper definiert auch die Anordnung der zur Antriebseinheit gehörenden Antriebsrolle relativ zum Bandkörper und seinen Umlenkelementen an dessen vorderen und hinteren Ende. Diese Anordnung ändert sich durch Entnahme des Förderbands aus dem Chassis vorteilhaft nicht, so dass die einmal vorgenommene positionelle Einstellung der Antriebsrolle relativ zu den Umlenkelementen des Bandkörpers auch im entnommenen Zustand beibehalten wird. Das unterstützt einen ruhigen und sicheren Gurtlauf, wie er beispielsweise im Betrieb des Förderbands als Wägeband gewünscht ist. Vorzugsweise ist die Position der Antriebsrolle relativ zum Bandkörper einstellbar, um dadurch Einfluss auf die erzielbare Gurtspannung und den Gurtlauf nehmen zu können.

Vorzugsweise ist die Position wenigstens einer Umlenkrolle relativ zum Chassis gezielt veränderbar, um die sich beim Einsetzen des Förderbands ergebende Gurtspannung genau vorgeben zu können.

Nach einer vorteilhaften Ausführungsform der Erfindung ist vorgesehen, dass wenigstens ein Umlenkelement des Bandkörpers als Messerkante ausgebildet ist. Darunter ist ein Umlenkelement mit relativ kleinem Durchmesser zu verstehen, wodurch ein möglichst kleiner Übergabespalt zu einem in Förderrichtung benachbarten weiteren Bandkörper möglich wird.

Eine solche Messerkante umfasst beispielsweise wenigstens ein drehbar gelagertes Rollenelement, an dessen Mantelfläche der Transportgurt zur Umlenkung anliegt. Ergänzend oder alternativ ist es denkbar, eine Messerkante auszuführen mit wenigstens zwei unabhängig voneinander drehbar gelagerten solchen Rollenelementen, mit gleichen Durchmessern. Die Rollenelemente liegen dabei in Querrichtung Y hintereinander. Wenigstens zwei dieser Rollenelemente weisen dabei zwischen sich eine Abstützung am Bandkörper auf. Die Abstützung stabilisiert die einzelnen Rollenelemente und vermeidet zugleich die Durchbiegung einer sich andernfalls über die gesamte Förderbreite durchgehend erstreckenden einzelnen Rolle (die ja für die Ausbildung eines kleinen Übergabespalts bevorzugt einen geringen Durchmesser hat und daher nicht sehr biegesteif ausgeführt werden kann).

Anstelle einer oder mehrerer drehbar gelagerter Rollen kommt als Messerkante auch wenigstens ein ortsfest am Bandkörper angeordneter, vorzugsweise stabartiger Materialabschnitt infrage, der sich ebenfalls in Querrichtung erstreckt und an dessen Außenfläche der Transportgurt anliegend umgelenkt wird.

Ein das erfindungsgemäße Förderband aufnehmendes Chassis umfasst Verbindungsmittel, um das Förderband lösbar am Chassis zu befestigen. Dabei kann es sich beispielsweise um Schrauben oder Klemmen handeln, die vorzugsweise ohne Werkzeug betätigbar sind.

Zur erfindungsgemäßen Erzeugung der Gurtspannung umfasst das Chassis wenigstens eine daran montierte Umlenkrolle, deren Drehachse sich in Querrichtung Y erstreckt. Diese wenigstens eine Umlenkrolle ist dazu ausgebildet, sich beim Einsetzen des Förderbandes in das Chassis gegen die Gurtaußenseite des Transportgurts zu drücken, um dadurch eine für den Betrieb vorgebbare Gurtspannung im Transportgurt zu erzeugen. Nachdem der Transportgurt beim Einsetzen des Förderbandes die Umlenkrolle kontaktiert, nimmt die dadurch erzeugte Gurtspannung vorzugsweise zu, je weiter das Förderband in das Chassis eingeschoben wird.

Erfindungsgemäß ist die wenigstens eine Umlenkrolle genau so am Chassis positioniert, dass der Transportgurt gerade dann seine gewünschte Gurtspannung aufweist, wenn das Förderband bis in eine vorgegebene Endposition vollständig in das Chassis eingesetzt bzw. eingeschoben wurde. Diese Endposition kann beispielsweise vorgegeben werden durch einen zwischen Förderband und Chassis wirkenden mechanischen Anschlag, der ein darüber hinausgehendes, weiteres Einschieben des Förderbandes in das Chassis verhindert. Vorzugsweise ist der Anschlag einstellbar.

Nach einer weiteren vorteilhaften Ausführungsform der Erfindung ist wenigstens eine zweite Umlenkrolle am Chassis vorgesehen, die im eingesetzten Zustand ebenfalls den Transportgurt umlenkt und ihn dazu auf seiner Außenseite beaufschlagt. Beispielsweise könnten die beiden Umlenkrollen - in Bezug auf die Förderrichtung - vor und hinter der Antriebsrolle positioniert sein, wobei sie dabei nicht zwingend auf der gleichen vertikalen Höhe angeordnet sein müssen. Im eingesetzten Zustand erstreckt sich der Transportgurt dann, zum Beispiel von einer vorderen Messerkante des Bandkörpers kommend, bis zu der ersten Umlenkrolle. Diese umläuft der Transportgurt mit seiner Außenseite unter einem ersten Umlenkwinkel, und erstreckt sich von dort zur Antriebsrolle, welche er mit seiner Gurtinnenseite entlang eines Umschlingungswinkels umläuft. Von dort erstreckt sich der Transportgurt zur zweiten Umlenkrolle, die er wiederum mit seiner Außenseite und unter einem zweiten Umlenkwinkel umläuft, um sich von dort über die hintere Messerkante des Bandkörpers und entlang der Oberfläche des Bandkörpers wieder bis zur vorderen Messerkante zu erstrecken. Die beiden Umlenkrollen bewirken dabei sozusagen jeweils einen Knick entlang der Umlaufbahn des Transportgurts, wie aus den Figuren noch anschaulich ersichtlich sein wird.

Durch die Verwendung zweier Umlenkrollen wird es vorteilhaft möglich, den Umschlingungswinkel des Transportgurts um die Transportwelle möglichst groß zu gestalten, und so eine möglichst gute Kraftübertragung zwischen Antriebsrolle und Transportgurt zu erzielen. Dies gelingt dann besonders gut, wenn die Antriebsrolle im eingesetzten Zustand in Bezug auf die Höhenrichtung Z tiefer liegt als die beiden Umlenkrollen. Konstruktiv einfach ist eine Ausführungsform, bei der zwei Umlenkrollen auf gleicher Höhenposition angeordnet sind. Ein großer Umschlingungswinkel des Transportgurts um die Antriebsrolle kann auch dadurch erzielt werden, dass die beiden Umlenkrollen in Bezug auf die Förderrichtung X einen Abstand zueinander aufweisen, der nur wenig größer ist als der Durchmesser der Antriebsrolle mit daran anliegenden Transportgurt. Die zwischen diesen Umlenkrollen hindurch abgesenkte Antriebsrolle wird dann über nahezu 180° vom Transportgurt umschlungen, da dieser auf seiner Außenseite von den beiden Umlenkrollen beaufschlagt und so umgelenkt wird, dass er sich nahezu parallel zwischen den Umlenkrollen und der Antriebsrolle erstreckt. Vorzugsweise bildet die Antriebsrolle W in Bezug auf die Höhenrichtung Z entlang eines Gurtumlaufs den tiefsten Punkt.

Nach einer weiteren vorteilhaften Ausführungsform der Erfindung ist vorgesehen, dass wenigstens eine Umlenkrolle so am oberen Ende des Chassis bzw. seiner Ausnehmung angeordnet ist, dass ein zwischen einem Ende des Bandkörpers und dieser Umlenkrolle verlaufender gerader Gurtabschnitt, vorzugsweise ein unmittelbar an die Rolle angrenzender gerader Gurtabschnitt, mit der Transportfläche einen ersten Winkel α einschließt nach der Bedingung:
α < 25°, vorzugsweise α < 5°, höchst vorzugsweise α = 0°

In dem höchst bevorzugten Fall verläuft der Transportgurt knapp unterhalb des Bandkörpers im Wesentlichen parallel zur Transportfläche und beansprucht somit keinen tiefer liegenden Raum im Chassis. Dabei kann er vorteilhaft oberhalb des Motors der Antriebseinheit entlanggeführt werden und - im Fall der nur einseitigen Befestigung des Motors am Bandkörper - leicht aus diesem Zwischenraum seitlich heraus entnommen werden.

In gleicher Weise kann vorgesehen sein, dass ein zwischen der Umlenkrolle und der Antriebsrolle verlaufender gerader Gurtabschnitt, vorzugsweise ein unmittelbar an die Umlenkrolle angrenzender gerader Gurtabschnitt, unter einem zweiten Winkel β zur Transportfläche verläuft nach der Bedingung:
β < 115°, vorzugsweise β < 95°, höchst vorzugsweise β = 90°.

Hierdurch wird festgelegt, dass sich der Transportgurt von der wenigstens einen Umlenkrolle aus im Wesentlichen senkrecht nach unten in Richtung auf die Antriebsrolle erstreckt, und - sofern eine zweite Umlenkrolle nach dem gleichen Prinzip vorgesehen ist - von dort wieder senkrecht nach oben in Richtung auf die zweite Umlenkrolle geführt wird. Auch durch diese Bandführung wird - in Bezug auf die Förderrichtung X - kein Bauraum vor oder hinter der bzw. den Umlenkrollen beansprucht. Außerdem wird durch die weitgehend parallele Gurtführung zwischen Umlenkrollen und Antriebsrolle ein vorteilhaft großer Umschlingungswinkel an der Antriebsrolle erreicht.

Theoretisch ist auch ein Umschlingungswinkel größer als 180° denkbar. Durch eine Verschiebung des Förderbands in oder entgegen der Förderrichtung und damit einer Verschiebung der Antriebsrolle bis zumindest teilweise unterhalb einer der Umlenkrollen vergrößert sich der Umschlingungswinkel weiter, wobei sich dann der vorgenannte zweite Winkel β entsprechend reduziert auf einen Wert kleiner als 90°.

Nach einer weiteren vorteilhaften Ausführungsform der Erfindung ist vorgesehen, dass das Chassis eine in Höhenrichtung Z nach oben offene Ausnehmung aufweist. Zweckmäßigerweise wird die Ausnehmung dabei von wenigstens einer, vorzugsweise zwei der zuvor genannten Umlenkrollen in bzw. entgegen der Förderrichtung X begrenzt. Diese Ausnehmung ist dazu vorgesehen, das vom Chassis zunächst getrenntes Förderband in den Betriebszustand zu überführen, indem das Förderband mit der Antriebsrolle und dem umlaufenden Transportgurt voran bis zu einem zwischen Chassis und Förderband wirkenden Anschlag in die Ausnehmung eingetaucht wird. Dadurch gelangt der Transportgurt mit seiner Außenseite in Kontakt mit der wenigstens einen Umlenkrolle, welche den Transportgurt beim weiteren Einschieben der Antriebsrollen in die Ausnehmung zunehmend spannt.

Das Chassis, welches das Förderband im Betriebszustand aufnimmt, kann beispielsweise zur Montage an dem Gestell einer Förderstrecke montiert werden. Denkbar ist es ferner, das Chassis zur Montage auf dem Lastaufnehmer einer Waage auszubilden, sodass das Chassis mitsamt dem darin eingesetzten Förderband Vorlast für die Waage bildet und die Ermittlung des Gewichts der von dem Förderband transportierten Produkte ermöglicht.

Außerdem kann das Chassis nach einer Ausführungsform der Erfindung als eine Behausung bzw. Eingreifschutz ausgebildet sein, der insbesondere den im eingesetzten Zustand innerhalb des Chassis geführten Transportgurt umschließt und diesen gegen ungewollten Kontakt mit menschlichen Gliedmaßen sichert. Ferner kann das Chassis auf einer Unterseite auch mit Öffnungen versehen sein, um Schmutzpartikel oder Flüssigkeiten aus dem Chassis leichter abführen zu können.

Nachfolgend soll eine Ausführungsform der Erfindung anhand von Figurenbeispielen näher erläutert werden. Dabei zeigen
- Figur 1: eine vereinfachte perspektivische Ansicht eines erfindungsgemäßen Förderbandes,
- Figur 2: eine vereinfachte perspektivische Darstellung eines zugehörigen Chassis;
- Figur 3: eine vereinfachte perspektivische Ansicht eines in das Chassis eingesetzten Förderbands, und
- Figur 4: eine perspektivische Ansicht des Förderbandes von schräg unten.

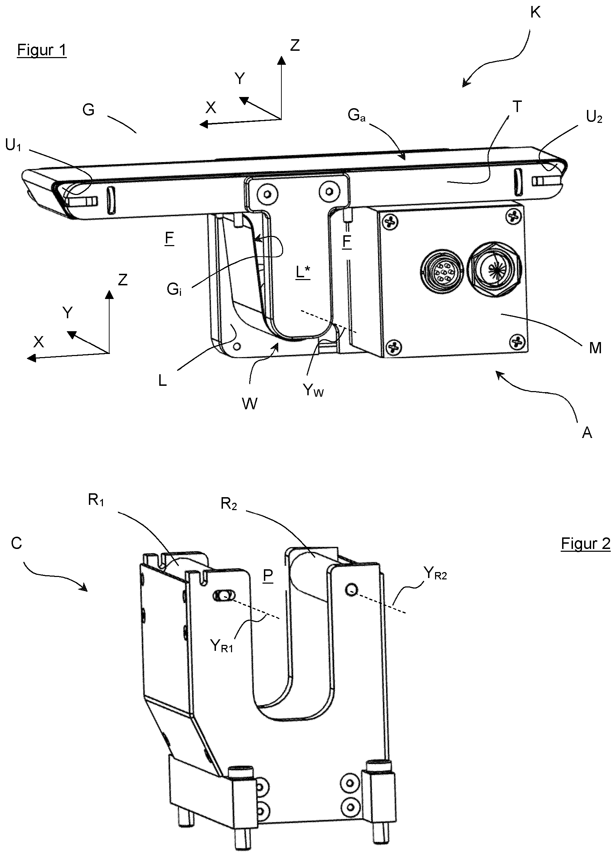

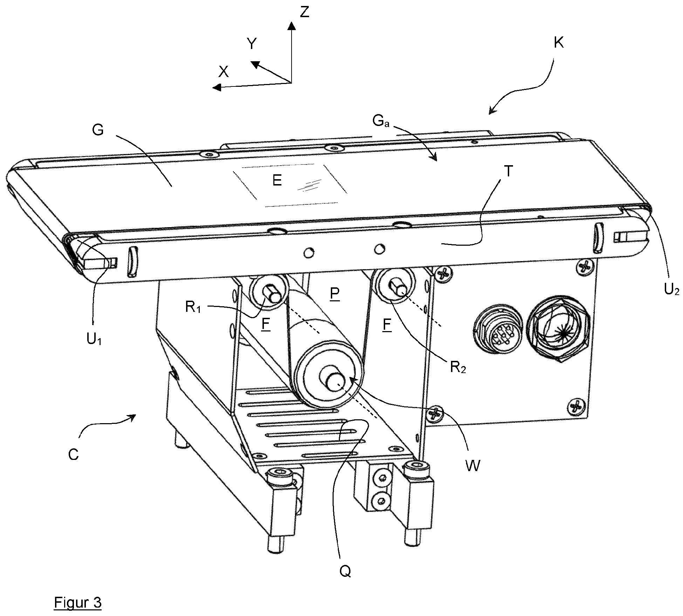

Figur 1 zeigt in vereinfachter perspektivischer Seitenansicht ein von einem Chassis C getrenntes Förderband K. In diesem getrennten Zustand befindet sich das Förderband K in einem Wartungszustand, indem einzelne Komponenten des Förderbandes gewartet oder ausgetauscht werden können. Das Förderband K umfasst einen Bandkörper T, der sich in einer bevorzugten horizontalen Förderrichtung X, einer dazu orthogonalen, bevorzugt ebenfalls horizontalen Querrichtung Y und einer zu beiden Richtungen orthogonalen Höhenrichtung Z erstreckt. Der Bandkörper T ist in Höhenrichtung Z gesehen relativ flach ausgebildet und dient als Auflage für einen den Bandkörper umlaufenden Transportgurt G, der im dargestellten Ausführungsbeispiel als Transportband ausgeführt ist und sich im Wesentlichen über die gesamte Breite des Bandkörpers T in Querrichtung Y dazu erstreckt. Der Transportgurt G bildet mit seiner dem Bandkörper T abgewandten Gurtaußenseite Gₐ auf der Oberseite des Bandkörpers T eine ebene Transportfläche E (s. Fig. 3), hingegen ist die Gurtinnenseite Gᵢ dem Bandkörper zugewandt.

An seinem in Förderrichtung X gesehen vorderen und hinteren Ende umfasst der Bandkörper T jeweils ein Umlenkelement U₁, U₂ für den Transport G, welches jeweils als Messerkante mit geringem Durchmesser ausgebildet ist. Von den Umlenkelementen erstreckt sich der Transportgurt zur Unterseite des Bandkörpers und umläuft dort eine in Figur 3 besser zu sehende Antriebsrolle W, die sich in Querrichtung Y entlang ihrer Wellenachse Y_{W} erstreckt. Die Antriebsrolle W wird von einem Motor M angetrieben und bildet gemeinsam mit diesem eine Antriebseinheit A für den Transportgurt. Die Antriebseinheit A ist über eine Flanschplatte L an dem Bandkörper T befestigt und bildet gemeinsam mit ihm ein modulares Förderband K. Die Antriebsrolle W wird mittels zweier Lager gelagert, von denen eines an der Flanschplatte L, das zweite an einer der Flanschplatte L in Querrichtung Y gegenüberliegenden Hilfsplatte L* angeordnet ist.

In Bezug auf die Förderrichtung X ist unterhalb des Bandkörpers T vor und hinter der Antriebsrolle W jeweils ein Freiraum F ausgebildet. Dieser Freiraum F dient, wie noch zu sehen sein wird, zur Beaufschlagung des Transportgurts mittels zweier Umlenkrollen, um den Gurt dabei zu spannen.

Figur 2 zeigt in vereinfachter perspektivischer Darstellung ein zum Förderband K passendes Chassis C. Das Förderband K ist erfindungsgemäß mit dem Chassis C verbindbar, in dem es entgegen der Höhenrichtung Z und mit der vom Transportgurt G umlaufenden Antriebsrolle W voraus in das Chassis C abgesenkt wird und dadurch einen betriebsbereiten Zustand erlangt (Betriebszustand).

Das Chassis C hat im Wesentlichen quaderförmige Struktur mit vier sich in Höhenrichtung Z erstreckenden und seitlich aneinander angrenzenden Seitenwänden. Nach unten hin ist das Chassis C von einem nicht zu sehenden Boden verschlossen, wobei einzelne Öffnungen Q im Boden den Austritt von Flüssigkeit oder Schmutz ermöglichen (siehe hierzu Fig. 3).

An seiner dem Boden gegenüberliegenden Oberseite ist das Chassis C offen und bietet eine Ausnehmung P, durch welche die Antriebsrolle W nebst Transportgut G entgegen der Höhenrichtung Z in den Innenraum des Chassis C abgesenkt werden kann. In Bezug auf die Förderrichtung X wird die Ausnehmung P an ihrem oberen Ende von zwei Umlenkrollen R₁, R₂ begrenzt, die sich mit ihren zugehörigen Achsen Y_{R1}, Y_{R2} in Querrichtung Y erstrecken und in etwa die Breite des Transportgurts G aufweisen. Die Umlenkrollen R₁, R₂ sind in Förderrichtung X etwas weiter beanstandet als der Durchmesser der Antriebsrolle W, sodass die Antriebsrolle W zwischen den beiden Umlenkrollen hindurch in das Chassis abgesenkt werden kann, bis das Förderband an einem nicht näher gezeichneten Anschlag am Chassis C anliegt und damit seine Endposition bzw. seinen Betriebszustand erreicht hat.

Dieser Fall ist in Figur 3 dargestellt. Dort ist zu erkennen, wie das von oben in das Chassis C eingesetzte Förderband K mit der zum Förderband gehörenden Antriebsrolle W gemeinsam mit dem die Antriebsrolle umlaufenden Transportgurt G in die Ausnehmung P hineinragt (zur Verdeutlichung wurde eine Seitenwand des Chassis C in dieser Ansicht weggelassen). Die beiden zum Chassis C gehörenden Umlenkrollen R₁, R₂ kommen dabei jeweils in dem bezüglich Figur 1 bereits vorgestellten Freiraum F vor und hinter der Antriebsrolle W zu liegen. Dabei beaufschlagen sie den jeweils von der Antriebsrolle W zum vorderen bzw. hinteren Umlenkelement U₁, U₂ geführten Transportgurt G auf seiner Außenseite Ga und lenken ihn dabei jeweils um ein Maß um die jeweilige Umlenkrolle herum. Im dargestellten Beispiel beträgt der Umlenkwinkel an jeder der beiden Umlenkrolle ca. 90°.

Von den beiden Umlenkrollen erstreckt sich der Transportgurt G abwärts in Richtung auf die Antriebsrolle und umläuft diese mit einem Umschlingungswinkel von ca. 180°. Zugleich ist die Anordnung der Umlenkrollen R₁, R₂ im Chassis C so gewählt, dass sich der Transportgurt G, wenn das Förderband K seine Endlage im Chassis C erreicht hat, betriebsbereit gespannt ist. Je nach Position der Umlenkrollen relativ zur Antriebsrolle verlängert oder verkürzt sich die vom Transportgurt G zurückzulegende Strecke zwischen Antriebsrolle W und Umlenkelement U₁, U₂ am Bandkörper T, wodurch auf die Gurtspannung Einfluss genommen werden kann.

Eine Feineinstellung der Gurtspannung und des Gurtlaufs ist außerdem möglich dadurch, dass die Umlenkrolle R₁, wie in Figur 2 angedeutet, entlang eines in Förderrichtung X verlaufenden Langlochs verschieblich fixierbar ist.

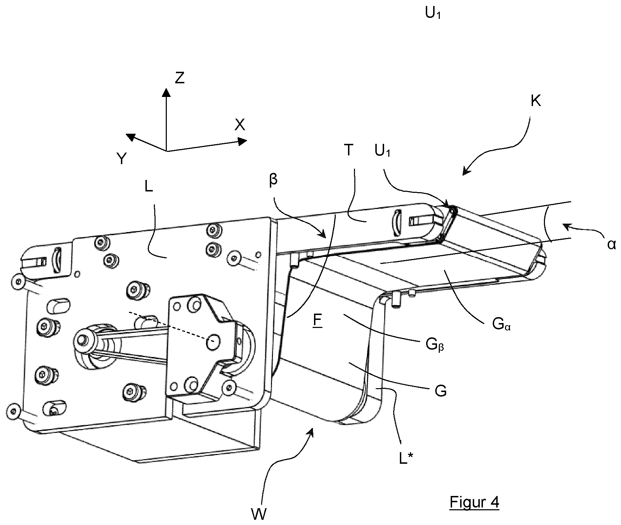

Figur 4 zeigt das Förderband K aus einer anderen Perspektive von schräg unten. Dabei soll hier angenommen werden, dass die beiden aus Figur 3 bekannten Umlenkrollen R₁, R₂ zwar nicht zu sehen sind, der Transportgurt G aber dennoch die von diesen Rollen im Betriebszustand aufgezwungene Form bzw. den in Figur 4 analog zu Figur 3 entsprechend dargestellten Laufweg einnimmt, und dabei auch die Antriebsrolle W verdeckt. Dabei ist zu sehen, dass sich ein erster Gurtabschnitt G_{α} auf seinem Weg vom Umlenkelement U₁ im Wesentlichen parallel zur Förderfläche auf der Oberseite des Bandkörpers T in Richtung auf die (nicht dargestellte) Umlenkrolle erstreckt bzw. mit der Förderfläche einen ersten Winkel α einschließt. Vorzugsweise ist der erste Winkel α möglichst klein, um den Transportgurt knapp unterhalb des Bandkörpers T führen zu können und dadurch den bereits erwähnten Freiraum F freizuhalten. Aus dem gleichen Grund erstreckt sich ein zweiter Gurtabschnitt G_{β}, der von der nicht dargestellten Umlenkrolle bis zur Antriebsrolle W führt, unter einem zweiten Winkel β relativ zur Förderfläche, wobei dieser Winkel möglichst nahe an 90° liegt. Auch dann bleibt der Freiraum F verfügbar für die Umlenkrolle, zugleich ergibt sich ein besonders vorteilhafter bzw. ausreichend großer Umschlingungswinkel, mit dem der Transportgurt die Antriebsrolle W umläuft.

### Bezugszeichen

- A: Antriebseinheit
- C: Chassis
- D_{U}: Durchmesser Rollenelement an Messerkante
- D_{W}: Durchmesser der Antriebsrolle W
- E: Transportfläche
- F: Freiraum
- G: Transportgurt
- Gₐ: Gurtaußenseite
- Gᵢ: Gurtinnenseite
- G_{α}: erster Gurtabschnitt
- G_{β}: zweiter Gurtabschnitt
- K: Förderband
- L: Flanschplatte
- L*: Hilfsplatte
- M: Motor
- P: Ausnehmung
- Q: Öffnungen im Chassis
- R₁, R₂: Umlenkrollen
- T: Bandkörper
- U₁, U₂: Umlenkelemente
- W: Antriebsrolle
- X: Förderrichtung
- Y: Querrichtung
- Z: Höhenrichtung
- α: erster Winkel
- β: zweiter Winkel

## Patentansprüche

1. Förderband (K), das sich in einer Förderrichtung (X), einer dazu orthogonal verlaufenden Querrichtung (Y) und einer zu beiden Richtungen (X, Y) orthogonal verlaufenden Höhenrichtung (Z) erstreckt, und wobei das Förderband (K) umfasst:
a) einen Bandkörper (T), der sich im Wesentlichen in Förderrichtung (X) und in Querrichtung (Y) erstreckt, wobei der Bandkörper (T) in Bezug auf die Förderrichtung (X) ein erstes Ende und ein dem ersten Ende gegenüberliegendes zweites Ende aufweist, und wobei der Bandkörper (T) am ersten und zweiten Ende jeweils ein sich in Querrichtung (Y) erstreckendes Umlenkelement (U1, U2) aufweist, wobei wenigstens eines der beiden Umlenkelemente (U1, U2) vorzugsweise als Messerkante ausgebildet ist,
b) und ein als Endlosband ausgebildeter, den Bandkörper (T) umlaufender Transportgurt (G),
c) und eine mit dem Bandkörper (T) verbundene Antriebseinheit (A), umfassend eine den Transportgurt (G) antreibende, in Querrichtung (Y) verlaufende Antriebsrolle (W) mit ihren beiden Lagerstellen und einen die Antriebsrolle (W) antreibenden Motor (M),
d) wobei der Transportgurt (G) so um den Bandkörper (T) herumgeführt ist, dass die beiden Umlenkelemente (U1, U2) und die Antriebsrolle (W) gemeinsam vom Transportgurt (G) umlaufen werden, wobei die dem Bandkörper (T) abgewandte Gurtaußenseite (Gₐ) entlang der Oberseite des Bandkörpers (T) eine ebene Transportfläche (E) zur Auflage von Produkten bildet,
**dadurch gekennzeichnet,**
e) **dass** der Bandkörper (T) zusammen mit der daran befestigten Antriebseinheit (A) gemeinsam eine modulare Einheit bildet, die zum Betrieb in ein als Halterung und/oder Eingreifschutz dienendes Chassis (C) eingesetzt (Betriebszustand) bzw. daraus entnommen (Wartungszustand) werden kann und
f) **dass** sich die Antriebsrolle (W) im Betriebszustand so unterhalb des Bandkörpers (T) befindet, dass
- in Z-Richtung oberhalb der Antriebsrolle (W)
und/oder
- in Förderrichtung (X) vor und/oder hinter der Antriebsrolle (W)
ein Freiraum (F) gebildet wird zur Anordnung wenigstens einer am Chassis befestigten Umlenkrolle (R₁, R₂), so dass die Umlenkrolle (R₁, R₂) an der Gurtaußenseite (Gₐ) des Transportgurts (G) anliegen kann, wobei sich die Drehachse (Y_{R1}, Y_{R2}) der Umlenkrolle (R₁, R₂) in Querrichtung (Y) erstreckt.

2. Förderband (K) nach Anspruch 1, **dadurch gekennzeichnet, dass** der Transportgurt (G) durch die Überführung in den Wartungszustand entspannt wird, und dass der Transportgurt (G) durch die Überführung in den Betriebszustand gespannt wird.

3. Förderband (K) nach Anspruch 1 oder 2, **dadurch gekennzeichnet, dass** der Transportgurt (G) im Wartungszustand vom Bandkörper (T) in Querrichtung (Y) abnehmbar ist,
a) ohne die Gurtspannung des Transportgurts (G) dazu weiter reduzieren zu müssen, und/oder
b) ohne die Antriebsrolle (W) oder ein Umlenkelement (U1, U2) relativ zum Bandkörper (T) lösen oder bewegen zu müssen, und/oder
c) ohne die Gurtbandlänge zur Gurtentspannung ändern zu müssen.

4. Förderband (K) nach einem der vorigen Ansprüche, **dadurch gekennzeichnet, dass** wenigstens ein, vorzugsweise beide Umlenkelemente (U1, U2) als Messerkante ausgebildet ist bzw. sind, wobei eine Messerkante umfasst
i) wenigstens ein drehbar gelagertes Rollenelement, an dessen Mantelfläche der Transportgurt (G) zur Umlenkung anliegt
und/oder
ii) wenigstens zwei unabhängig voneinander drehbar gelagerte Rollenelemente gleichen Durchmessers gemäß i), die in Querrichtung (Y) hintereinander liegen, wobei wenigstens zwei Rollenelemente zwischen sich eine Abstützung am Bandkörper (T) aufweisen,
und/oder
iii) wenigstens einen ortsfest am Bandkörper (T) angeordneten, sich in Querrichtung (Y) erstreckenden, vorzugsweise stabartigen Materialabschnitt, an dessen Außenfläche der Transportgurt (G) anliegend umgelenkt wird.

5. Chassis (C) zur Aufnahme eines in das Chassis (C) einsetzbaren Förderbands (K) nach einem der vorigen Ansprüche, umfassend wenigstens eine am Chassis (C) montierte Umlenkrolle (R₁, R₂), deren Drehachse (Y_{R1}, Y_{R2}) sich in Querrichtung (Y) erstreckt, wobei die wenigstens eine Umlenkrolle (R₁, R₂) dazu ausgebildet ist, sich beim Einsetzen des Förderbands (K) in das Chassis (C) gegen die Gurtaußenseite (Gₐ) des Transportgurts (G) zu drücken, um dadurch eine für den Betrieb vorgebbare Gurtspannung im Transportgurt (G) zu erzeugen.

6. Chassis (C) zur Aufnahme eines in das Chassis (C) einsetzbaren Förderbands (K) nach einem der vorigen Ansprüche, wobei Verbindungsmittel zur lösbaren Befestigung des Förderbands (K) am Chassis (C) vorgesehen sind.

7. Chassis (C) nach Anspruch 5 oder 6, **dadurch gekennzeichnet, dass** die Position wenigstens einer Umlenkrolle (R₁, R₂) relativ zum Chassis (C) gezielt veränderbar ist, um die sich beim Einsetzen des Förderbands (K) ergebende Gurtspannung und/oder den Gurtlauf genau vorgeben zu können

8. Chassis (C) nach einem der Ansprüche 5 bis 7, **dadurch gekennzeichnet, dass** das Chassis (C)
a) zur Montage auf dem Lastaufnehmer einer Wägezelle,
oder
b) zur Montage an einem Gestell einer Förderstrecke
ausgebildet ist.

9. Chassis (C) nach einem der Ansprüche 5 bis 8, **dadurch gekennzeichnet, dass** das Chassis (C) entlang seiner Ausdehnung in Querrichtung (Y) eine in Höhenrichtung (Z) nach oben offene Ausnehmung (P) aufweist, deren Ausdehnung in und/oder entgegen der Förderrichtung (X) von der wenigstens einen Umlenkrolle (R₁, R₂) begrenzt wird, wobei die Ausnehmung (P) dazu vorgesehen ist, ein vom Chassis (C) zunächst getrenntes Förderband (K) nach einem der Ansprüche 1 bis 4 in den Betriebszustand zu überführen, indem das Förderband mit der Antriebsrolle (W) und dem umlaufenden Transportgurt (G) voran bis zu einem zwischen Chassis (C) und Förderband (K) wirkenden Anschlag in die Ausnehmung (P) eingetaucht wird, um dabei den Transportgurt (G) mit der wenigstens einen Umlenkrolle (R₁, R₂) zu beaufschlagen und zu spannen, vorzugsweise betriebsbereit zu spannen.

10. Förderbandsystem, umfassend ein Förderband (K) nach einem der Ansprüche 1 bis 4 und ein Chassis (C) nach einem der Ansprüche 5 bis 9, wobei für das Förderband (K) im eingesetzten Zustand gilt
a) die Drehachse (Y_{R1}, Y_{R2}) wenigstens einer Umlenkrolle (R₁, R₂) liegt in Höhenrichtung (Z) auf gleicher Höhe, bevorzugt aber höher als die Drehachse (Y_{W}) der Antriebsrolle (W),
und/oder
b) am Chassis (C) sind zwei Umlenkrollen (R₁, R₂) - vorzugsweise in gleicher Höhenposition (Z_{R}) - vorgesehen, deren lichter Abstand in Förderrichtung (X) ausreicht, um die Antriebsrolle (W) mit dem sie umschließenden Transportgurt (G) zwischen sich passieren zu lassen.

11. Förderbandsystem nach dem vorhergehenden Anspruch, **dadurch gekennzeichnet, dass** wenigstens eine Umlenkrolle (R₁, R₂) so am oberen Ende des Chassis (C) bzw. seiner Ausnehmung (P) angeordnet ist,
a) dass ein zwischen einem Ende des Bandkörpers (T) und dieser Rolle (R₁, R₂) verlaufender gerader Gurtabschnitt (G_{α}), vorzugsweise ein unmittelbar an die Rolle (R₁, R₂) angrenzender gerader Gurtabschnitt, unter einem ersten Winkel (α) zur Transportfläche (E) verläuft nach der Bedingung:
α < 25°, vorzugsweise α < 5°, höchst vorzugsweise α = 0°
und/oder
b) dass ein zwischen der Rolle (R₁, R₂) und der Antriebsrolle (W) verlaufender gerader Gurtabschnitt (G_{β}), vorzugsweise ein unmittelbar an die Rolle (R₁, R₂) angrenzender gerader Gurtabschnitt, unter einem zweiten Winkel (β) zur Transportfläche (E) verläuft nach der Bedingung:
β < 115°, vorzugsweise β < 95°, höchst vorzugsweise β = 90°.

12. Förderbandsystem nach einem der Ansprüche 10 oder 11, **dadurch gekennzeichnet, dass** das Chassis (C)
a) einen Eingreifschutz bildet, welcher den Transportgurt (G) entlang wenigstens eines Abschnitts, vorzugsweise vollständig, zwischen den Umlenkelementen (U1, U2) gegen Zugang zu Umlenkrollen oder der Antriebsrolle (W) schützt,
und/oder
b) auf einer Unterseite mit Öffnungen (Q) versehen ist, um den Austritt von Schmutzpartikeln oder Flüssigkeiten aus dem Chassis (C) zu erleichtern.

13. Verfahren zur Erzeugung einer Gurtspannung im Transportgurt (G) eines Förderbands (K) nach Anspruch 1 unter Verwendung eines Chassis (C) nach Anspruch 5, umfassend folgende Verfahrensschritte:
a) Einsetzen des Förderbands (K) von oben in das Chassis (C) hinein mit der Antriebsrolle (W) voran,
b) Absenken des Förderbands (K) entlang der Höhenrichtung (Z) in einer Abwärtsbewegung, bis der Transportgurt (G) mit seiner Gurtaußenseite in Andruck mit der Umlenkrolle (R₁, R₂) des Chassis (C) gelangt,
c) Bewegen des Förderbandes (K) weiter abwärts, bis eine von der Einschubtiefe des Förderbandes in das Chassis abhängige Gurtspannung erzeugt wird.

14. Verfahren nach dem vorherigen Anspruch, **dadurch gekennzeichnet, dass** das Förderband (K) bis an einen zwischen Chassis (C) und Förderband (K) wirkenden vorgegebenen Anschlag in das Chassis (C) eingesetzt bzw. eingeschoben wird, der so gewählt bzw. positioniert ist, dass mit Erreichen des Anschlags die Gurtspannung für den regulären Betrieb des Förderbandes (K) ausreicht.

15. Verfahren zur Reduzierung der Gurtspannung im Transportgurt (G) eines Förderbands (K) nach Anspruch 1, welches betriebsbereit in ein Chassis (C) nach Anspruch 5 eingesetzt ist, umfassend folgenden Verfahrensschritt:
a) Herausheben des Förderbands (K) aus dem Chassis (C), bis sich die Andruckkraft zwischen Gurtaußenseite (Gₐ) und Umlenkrolle (R₁, R₂) reduziert und der Transportgurt (G) dann vollständig von der Umlenkrolle (R₁, R₂) löst und mit dem Förderband (K) aus dem Chassis (C) herausgehoben werden kann.
